# FASCICULE DE BREVET EUROPEEN

(11) **EP 2 080 430 B1**
(45) Date de publication et mention de la délivrance du brevet: **07.11.2018**
(21) Numéro de dépôt: 09150965.3
(22) Date de dépôt: 20.01.2009
(51) Int. Cl.: A01C 17/00, A01B 79/00

(54) **Procédé de réglage d'une machine agricole d'épandage de particules, dispositif de réglage, machine agricole d'épandage et programme d'ordinateur correspondants**
Verfahren zum Einstellen eines landwirtschaftlichen Zentrifugalstreuers, entsprechende Einstellvorrichtung, landwirtschaftlicher Zentrifugalstreuer und entsprechendes Computerprogramm
Method for adjusting an agricultural spreader, corresponding adjustment device, agricultural spreader and computer program

(30) Priorité: 21.01.2008 FR 0850374
(43) Date de publication de la demande: 22.07.2009
(73) Titulaire: Sulky Burel, 35220 Chateaubourg (FR)
(72) Inventeur: Clochard, Daniel, 35113 Domagne (FR); Piron, Emmanuel, 03300 Creuzier le Vieux (FR); Miclet, Denis, 03150 Varennes sur Allier (FR)
(74) Mandataire: Vidon Brevets & Stratégie

(56) Documents cités:
- EP-A- 0 347 643
- EP-A- 0 635 196
- EP-A- 1 161 856
- DE-A1- 4 302 801

## Description

### 1. Domaine de l'invention

Le domaine de l'invention est celui de l'épandage de produits, par exemple d'engrais ou de semis, notamment sous une forme granulaire.

Plus précisément, l'invention concerne le contrôle de l'épandage assuré par une machine d'épandage agricole, et notamment l'optimisation du réglage de la largeur de travail d'une machine d'épandage agricole, tel qu'un distributeur d'engrais.

### 2. Art antérieur

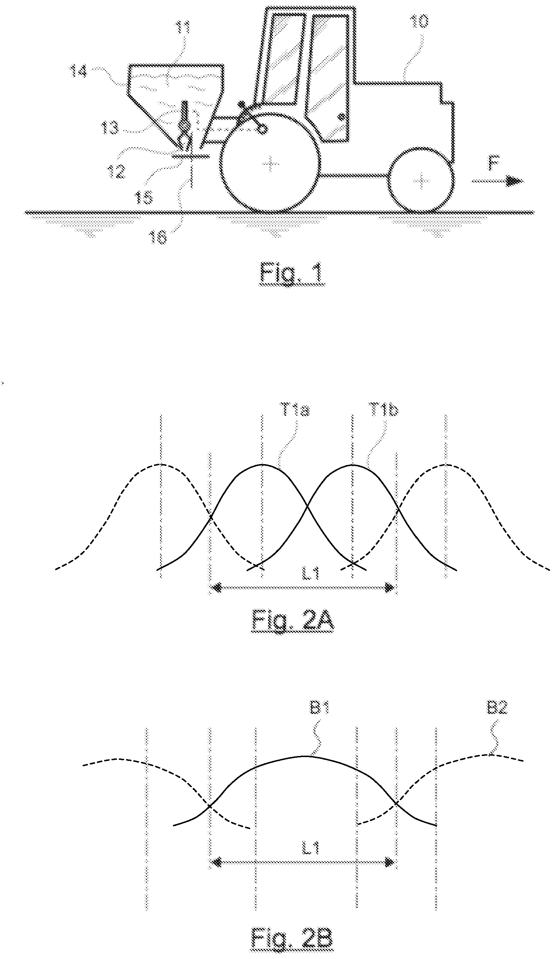

Dans les domaines de l'agriculture, les machines servant à épandre de l'engrais ou des semis sur une parcelle cultivable, se présentent généralement sous la forme d'un tracteur 10 portant une trémie 14 (réservoir) contenant l'engrais ou le semis 11 à épandre, comme illustré sur la figure 1.

Par la suite, on parlera d'engrais de manière non limitative, ce terme regroupant toutes les matières à épandre se présentant sous forme de particules, ou granulés.

Selon une technique classique, le fond de la trémie 14 comprend au moins une ouverture 12 laissant passer le contenu 11 de la trémie 14 vers une goulotte 13 de transfert qui est positionnée en surplomb d'un distributeur comprenant au moins un disque rotatif 15 portant des pales de projection. Les disques rotatifs 15 sont le plus souvent disposés dans une position sensiblement horizontale et leur rotation autour d'un axe 16 sensiblement vertical assure la projection du contenu 11 de la trémie 14 par effet centrifuge, sous la forme d'une nappe s'étendant à l'arrière de la machine d'épandage.

Classiquement, les distributeurs équipant les machines d'épandage du domaine de l'agriculture utilisent au moins deux disques rotatifs tournant en sens inverses l'un par rapport à l'autre, une telle configuration permettant de réaliser un épandage en engrais sur une grande largeur, généralement comprise entre 5 et 50 mètres, en fonction des paramètres de commande transmis au distributeur.

De telles machines d'épandage permettent de traiter une parcelle de terrain cultivable, le plus généralement selon un trajet prédéfini d'aller/retour sur celle-ci.

Les figures 2A et 2B présentent, de manière schématique, une distribution transversale ou courbe de répartition d'engrais se rapprochant d'une distribution idéale sur une ligne perpendiculaire à l'axe d'avancement du tracteur. Les distributions T1a et T1b (figure 2A) représentent les distributions transversales d'engrais respectives pour chaque disque rotatif de la machine d'épandage lors d'un seul passage du tracteur sur la parcelle, la distribution transversale des deux disques étant représentée sur la figure 2B.

L'épandage par l'intermédiaire des deux disques rotatifs est donc réalisé durant chaque trajet de la machine sur une bande B1 (figure 2B) d'une largeur prédéterminée L1, éventuellement modifiable, laquelle doit venir plus ou moins en chevauchement de la bande adjacente B2 pour pallier la diminution de la densité en engrais de la nappe d'épandage constatée sur les bords de chaque bande traitée.

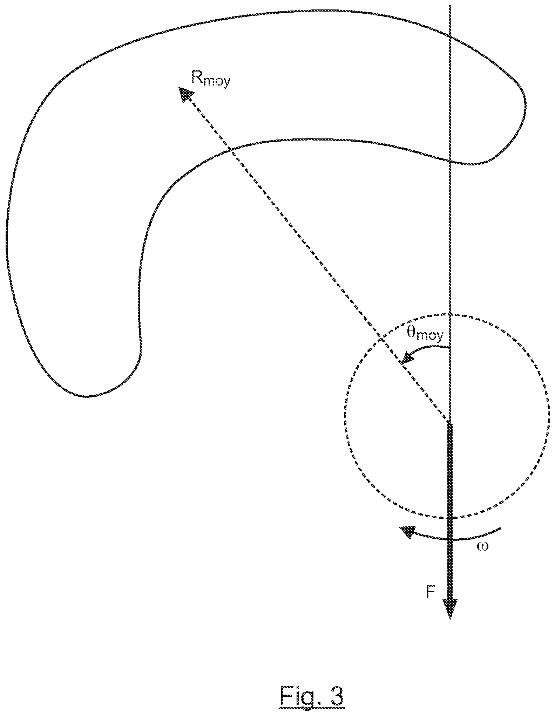

On a représenté sur la figure 3 la position spatiale (répartition instantanée) au sol d'une nappe d'épandage pour un seul disque d'épandage lors de l'avancement du tracteur selon l'axe F indiqué, la nappe d'épandage du deuxième disque rotatif étant symétrique à la nappe par rapport à l'axe d'avancement du tracteur. Les nappes d'épandage de chaque disque d'épandage doivent se chevaucher dans une zone centrale, c'est-à-dire proche de l'axe d'avancement du tracteur, afin d'obtenir idéalement pour chaque disque des distributions transversales de forme sensiblement semblables, et permettant, après sommation des apports d'engrais de ces deux répartitions unidisque, d'obtenir une forme sensiblement triangulaire.

La nappe d'épandage de la figure 3 est caractérisée par l'angle moyen du flux massique d'engrais projeté par rapport à l'axe d'avancement du tracteur, que l'on appellera par la suite « angle moyen de projection » θmoy, et par la portée moyenne du flux massique d'engrais, que l'on appellera aussi par la suite « rayon moyen » ou « distance moyenne de projection » Rmoy.

Il est connu de l'art antérieur que l'angle moyen de projection θmoy peut être modifié en déplaçant le point de chute de l'engrais 11 sur le disque rotatif 15, par l'intermédiaire de la goulotte 13 articulée, pouvant ou non être orientée à distance depuis le poste de conduite du tracteur 10, tandis que la portée moyenne Rmoy peut être modifiée en faisant varier par exemple (non limitatif) la vitesse de rotation ω du disque rotatif 15.

Pour des conditions identiques de projection de particules d'engrais (c'est-à-dire pour la même vitesse de rotation du disque, même hauteur et inclinaison du disque, même orientation des pales, même point de chute de l'engrais sur le disque, etc), la forme de la nappe d'épandage et sa position spatiale, et tout particulièrement les paramètres θmoy et Rmoy, sont différents selon les engrais et dépendent notamment de la granulométrie, de la masse volumique, du coefficient de frottement des particules d'engrais dans la pale du disque, la balistique des particules d'engrais, etc. Ce coefficient de frottement dépend lui-même du degré d'humidité de l'engrais.

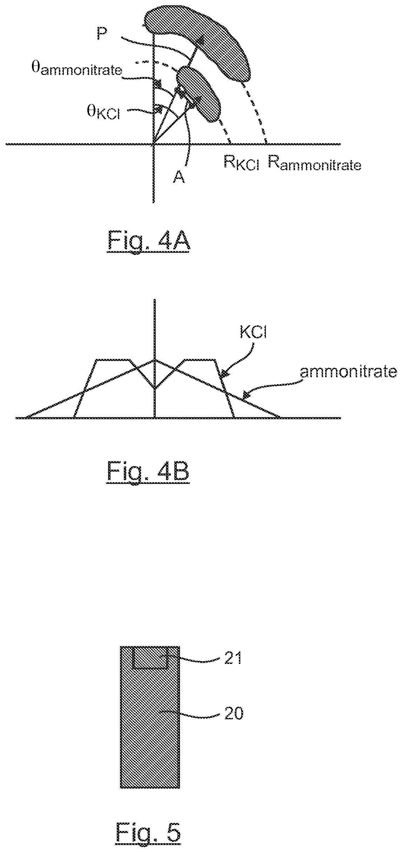

La figure 4A représente, de manière schématique, les positions spatiales au sol obtenues avec un seul disque dans les mêmes conditions de réglage d'une machine d'épandage avec deux engrais différents, à savoir l'ammonitrate et le chlorure de potassium (KCl). La différence de paramètres θmoy et Rmoy entre l'ammonitrate et le chlorure de potassium (KCl) apparait de manière claire. La distance moyenne de projection Rmoy est moins élevée pour le chlorure de potassium (KCl) que pour l'ammonitrate, tandis que l'angle moyen de projection θmoy est plus élevé. Dans l'exemple de cette figure, et avec les mêmes conditions de réglages et un disque donné, l'angle moyen de projection θmoy est de 2,9° pour l'ammonitrate et de 28,7° pour le chlorure de potassium (KCl). La distance moyenne de projection Rmoy est de 13,5 m pour l'ammonitrate et de 11,2 m pour le chlorure de potassium (KCl).

La figure 4B représente les distributions transversales schématiques associées aux positions spatiales de la figure 4A. Il apparaît clairement que la distribution transversale et la largeur d'épandage sont différentes selon les engrais pour les mêmes réglages de la machine d'épandage. Ainsi, la distribution transversale de l'ammonitrate pour les deux disques est de type sensiblement triangulaire, ce qui est proche de la répartition idéale, et celle du chlorure de potassium (KCl) est sensiblement en forme de « M », ce qui n'est pas satisfaisant et correspond à un défaut d'épandage. La largeur d'épandage de l'ammonitrate est en outre supérieure à la largeur d'épandage du chlorure de potassium (KCl).

Ce genre de machines et de procédés sont connus par exemple des documents EP 1 161 856 A2 et DE 43 02 801 A1.

Il est donc souhaitable de pouvoir « amener » une nappe d'engrais projeté, telle que la nappe de chlorure de potassium (KCl), dans la même position spatiale que la nappe d'ammonitrate afin d'obtenir la même distribution transversale idéale de type triangulaire et la même largeur de travail, quel que soit l'engrais utilisé.

A l'heure actuelle, les réglages nécessaires à la superposition des nappes doivent être réalisés manuellement par les utilisateurs, à partir d'abaques qui leur sont fournis. Ces abaques étant généralement indicatifs et incomplets (ils ne peuvent pas tenir compte de tous les engrais disponibles, et en tout état de cause de nouveaux produits, ni de toutes les conditions naturelles susceptibles d'être rencontrées), les réglages sont non seulement complexes, mais également approximatifs.

### 3. Objectifs de l'invention

L'invention a notamment pour objectif de pallier ces divers inconvénients de l'état de la technique.

Plus précisément, un objectif de l'invention est d'obtenir la même distribution transversale d'engrais quel que soit le type d'engrais utilisé pour une largeur de travail déterminée, et quelles que soient les conditions naturelles (température, humidité,...).

Un autre objectif de l'invention est de fournir une technique permettant d'optimiser et d'automatiser au moins partiellement le réglage de la largeur de travail d'un distributeur d'engrais.

Un objectif supplémentaire de l'invention est de fournir une telle technique qui soit précise, simple et économique à mettre en oeuvre.

Un dernier objectif de l'invention est de minimiser les défauts d'épandage.

### 4. Résumé de l'invention

Ces objectifs, ainsi que d'autres qui apparaîtront par la suite, sont atteints à l'aide d'un procédé de réglage d'une machine agricole d'épandage de particules comprenant des moyens de distribution de particules sur au moins un disque d'épandage, ledit disque étant rotatif et apte à projeter les particules sur le sol, ledit réglage visant à obtenir une valeur souhaitée pour deux paramètres de projection prédéterminés, à savoir un angle moyen de projection des particules en sortie du disque par rapport à l'axe d'avancement de ladite machine et une distance moyenne de projection, le procédé comprenant, selon l'invention la détermination dudit réglage pour deux paramètres de projection prédéterminés à partir d'une seule mesure, et comprenant aussi les étapes suivantes :
- une étape de mesure d'une première information représentative d'un décalage entre la valeur souhaitée d'un premier desdits paramètres de projection et une valeur de référence dudit premier paramètre de projection;
- une étape de détermination d'une deuxième information représentative d'un décalage entre la valeur souhaitée dudit second desdits paramètres de projection et une valeur de référence dudit second paramètre de projection en fonction de ladite première information mesurée et d'une règle de calcul prédéterminée ;
- une première étape de réglage d'au moins un élément de ladite machine de façon à obtenir la valeur souhaitée dudit premier paramètre, en fonction dudit décalage entre la valeur souhaitée et la valeur de référence dudit premier desdits paramètres de projection ; et
- une seconde étape de réglage d'au moins un élément de ladite machine de façon à obtenir la valeur souhaitée dudit second paramètre, en fonction de ladite deuxième information représentative dudit décalage entre la valeur souhaitée et la valeur de référence dudit second desdits paramètres de projection.

L'invention permet ainsi de régler l'angle moyen de projection et la distance moyenne de projection à partir d'une seule mesure, qui peut être soit une mesure d'une information liée à l'angle moyen de projection, soit une mesure d'une information liée à la distance moyenne de projection.

Dans un premier mode de mise en oeuvre qui sera présenté en détail ci-dessous, l'étape de mesure et la première étape de réglage sont simultanés et correspondent à l'ajustement de la position de la goulotte d'amenée des particules sur un disque de projection, à l'aide d'un paramètre de réglage appelé index goulotte, depuis une valeur de référence (qui peut par exemple être une valeur de réglage par défaut pour une largeur de travail et un type de particule donnés) jusqu'à ce que l'angle moyen de projection corresponde à celui souhaité, pour une largeur de travail donnée. La lecture de la variation de l'index goulotte entre le début et la fin de l'ajustement donne l'information (première information) de l'étape de mesure. Ces étapes peuvent être automatisées.

A partir de cette première information, des moyens de traitement, par exemple un ordinateur de bord, déterminent les réglages à apporter pour adapter la distance moyenne de projection (par exemple réglage de la vitesse de rotation et/ou inclinaison disque, etc... qui sont, par défaut, à leur valeur de référence), en fonction de la largeur de travail souhaitée et éventuellement, d'une indication sur le type de particule projetée. Cette indication sur le type de particule peut être très simple et comporter peu de choix possibles, par exemple du type « particules légères », ou « particules lisses ». Elle a notamment pour objet de permettre à l'ordinateur de bord de choisir la relation la plus adaptée pour déterminer le réglage à apporter.

De la même manière, selon un autre mode de réalisation, la mesure d'une information liée à la distance moyenne de projection peut permettre de déterminer les réglages à apporter pour adapter la distance moyenne de projection, mais aussi à l'angle moyen de projection. Ainsi, selon l'invention, on mesure une information liée à un seul des paramètres et les moyens de traitement en déduisent le second.

De façon préférentielle, lesdites valeurs de référence desdits paramètres de projection correspondent aux valeurs obtenues dans les conditions de réglage initiales desdits éléments de ladite machine.

Les valeurs de référence peuvent ainsi être déterminée arbitrairement avant toute mesure. Le réglage selon le procédé de l'invention permet d'adapter la machine en fonction des caractéristiques réelles des particules à épandre.

Selon un premier mode de réalisation de l'invention, ladite première information mesurée est représentative d'un décalage d'angle moyen de projection des particules.

Cette mesure de l'ajustement nécessaire de l'angle moyen d'épandage depuis sa valeur de référence permet alors, selon l'invention, de déterminer l'ajustement nécessaire des éléments influant sur la distance moyenne d'épandage.

Selon une caractéristique particulière de ce mode de réalisation, ladite étape de mesure comprend les sous-étapes de :
- obtention d'un signal électrique représentatif des impacts générés par un flux de particules projetées en sortie du disque sur au moins un élément rigide, dit élément d'impact ;
- traitement dudit signal, pour déterminer une information sur le décalage entre la valeur courante et la valeur souhaitée dudit angle moyen de projection des particules ;
- modification de la valeur courante dudit angle moyen afin de diminuer ledit décalage ; et
- itération des trois sous-étapes précédentes jusqu'à ce que ladite valeur courante et ladite valeur souhaitée soient égales.

Ce mode de réalisation peut notamment utiliser un système existant de réglage de l'angle moyen de projection, appelé « Justax » (marque déposée).

Avantageusement, ladite première étape de réglage et ladite étape de mesure sont simultanées.

On peut ici noter que l'ordre des étapes tel que défini plus haut est sans incidence sur le procédé de l'invention, l'important étant que la détermination du second paramètre se fasse en fonction de la mesure du premier paramètre.

Selon un second mode de réalisation possible de l'invention, l'étape de mesure comprend une mesure de la vitesse de projection des particules en sortie du disque.

Cette mesure d'une information sur l'un des éléments influant sur la distance moyenne d'épandage (les informations sur les éléments influant sur la distance moyenne d'épandage étant connus) permet alors, selon l'invention, de déterminer l'ajustement nécessaire de l'angle moyen d'épandage depuis sa valeur de référence

Préférentiellement, lesdites étapes de réglage agissent sur au moins un des aspects appartenant au groupe comprenant :
- la vitesse de rotation du disque d'épandage ;
- l'inclinaison du disque d'épandage ;
- l'inclinaison de la machine d'épandage ;
- la hauteur de la machine d'épandage ;
- le point de chute des particules sur le disque d'épandage.

Parmi ces aspects, les quatre premiers ont essentiellement une influence sur la distance moyenne de projection des particules, et le cinquième a essentiellement une influence sur l'angle moyen de projection des particules.

Selon un aspect particulier de réalisation, ladite règle de calcul prédéterminée est une fonction mathématique liant ledit angle moyen de projection des particules en sortie du disque et ladite distance moyenne de projection.

Selon une autre approche, ladite règle de calcul prédéterminée est un abaque ou une table de valeurs liant ledit angle moyen de projection des particules en sortie du disque et ladite distance moyenne de projection.

Cette fonction mathématique ou cet abaque peut être adapté aux caractéristiques de la machine utilisée.

Préférentiellement, ladite règle de calcul prédéterminée est choisie en fonction d'une catégorie d'engrais donnée et une largeur de travail souhaitée.

Cette catégorie d'engrais ne correspond pas à une description précise de l'engrais, mais par exemple à une indication sur le type de particule, qui peut être simple et comporter peu de choix possibles, tels que « particules légères », ou « particules lisses ». Elle a uniquement pour objet de permettre à l'ordinateur de bord de choisir la règle de calcul la plus adaptée pour déterminer le réglage à apporter. L'information sur la largeur de travail souhaitée peut être indiquée par l'utilisateur sur l'ordinateur de bord de sa machine.

L'invention concerne également un programme d'ordinateur comprenant des instructions de code de programme pour l'exécution des étapes du procédé de réglage d'une machine agricole d'épandage, selon l'une quelconque des caractéristiques ci-dessus, lorsque ledit programme est exécuté sur un ordinateur.

Un tel programme, fonctionnant sur l'ordinateur de bord de la machine, peut permettre d'automatiser des étapes du procédé selon l'invention.

L'invention concerne encore un dispositif de réglage d'une machine agricole d'épandage de particules comprenant des moyens de distribution de particules sur au moins un disque d'épandage, ledit disque étant rotatif et apte à projeter les particules sur le sol, ledit réglage visant à obtenir une valeur souhaitée pour deux paramètres de projection prédéterminés, à savoir un angle moyen de projection des particules en sortie du disque par rapport à l'axe d'avancement de ladite machine et une distance moyenne de projection,
le dispositif déterminant ledit réglage pour deux paramètres de projection prédéterminées à partir d'une seule mesure et comprenant, selon l'invention :
- des moyens de mesure d'une première information représentative d'un décalage entre la valeur souhaitée d'un premier desdits paramètres de projection et une valeur de référence dudit premier paramètre de projection ;
- des moyens de détermination d'une deuxième information représentative d'un décalage entre la valeur souhaitée dudit second desdits paramètres de projection et une valeur de référence dudit second paramètre de projection en fonction de ladite information mesurée et d'une règle de calcul prédéterminée ; et
- des moyens de réglage d'au moins un élément de ladite machine de façon à obtenir la valeur souhaitée dudit premier paramètre, en fonction dudit décalage ;
- des moyens de réglage d'au moins un élément de ladite machine de façon à obtenir la valeur souhaitée dudit second paramètre, en fonction de ladite deuxième information représentative de la valeur de référence dudit second paramètre.

Un tel dispositif permet de mettre en oeuvre efficacement le procédé selon l'invention.

Selon un mode de réalisation, lesdits moyens de mesure comprennent des moyens de mesure d'une information représentative d'un décalage d'angle moyen de projection des particules en sortie du disque.

Selon un autre mode de réalisation, lesdits moyens de mesure comprennent des moyens de mesure d'une information représentative d'un décalage de la vitesse de projection des particules en sortie du disque.

L'invention concerne également une machine agricole d'épandage de particules équipée de moyens de distribution de particules sur au moins un disque d'épandage, ledit disque étant rotatif et apte à projeter les particules sur le sol, la machine étant caractérisée en ce qu'elle comporte un dispositif de réglage selon l'une quelconque des caractéristiques ci-dessus.

Préférentiellement, cette machine agricole comporte des moyens de réglage automatique par asservissement d'au moins un desdits éléments de ladite machine.

De tels moyens de réglage automatiques asservis peuvent permettre de mettre en oeuvre le procédé de réglage selon l'invention de façon totalement automatique.

### 5. Liste des figures

D'autres caractéristiques et avantages de l'invention apparaîtront plus clairement à la lecture de la description suivante d'un mode de réalisation préférentiel de l'invention, donné à titre d'exemple illustratif et non limitatif, faite en référence aux dessins annexés parmi lesquels :
- la figure 1 est une vue schématique de côté d'une machine d'épandage d'engrais attelée à un tracteur ;
- la figure 2A présente, de manière schématique, une suite de distributions transversales proche de la distribution idéale d'engrais pour un seul disque rotatif d'une machine d'épandage, et la figure 2B présente, de manière schématique, la distribution transversale correspondante pour les deux disques rotatifs de la machine d'épandage ;
- la figure 3 illustre schématiquement la position spatiale (répartition instantanée) au sol d'une nappe d'épandage d'engrais pour un seul disque d'épandage lors de l'avancement du tracteur selon l'axe indiqué ;
- la figure 4A illustre, de manière schématique, la position spatiale (répartition instantanée) au sol d'une nappe d'épandage de chlorure de potassium (KCl) et d'une nappe d'épandage d'ammonitrate pour un seul disque d'épandage pour les mêmes réglages de la machine d'épandage ;
- la figure 4B illustre, de manière schématique, les distributions transversales correspondantes aux nappes de la figure 4A ;
- la figure 5 représente, schématiquement, un capteur d'impact selon un mode de réalisation de l'invention ;
- la figure 6 montre, de manière schématique, la vitesse d'éjection et l'angle d'éjection d'une particule d'engrais quittant un disque rotatif de la machine d'épandage ; et
- la figure 7 décrit les principales étapes du procédé de réglage selon un mode de réalisation de l'invention.

### 6. Description d'un mode de réalisation de l'invention

### 6.1 Aspects généraux

La technique de réglage et d'optimisation de la largeur de travail selon l'invention vise donc, quel que soit l'engrais utilisé, à ramener la nappe d'épandage d'engrais dans une position spatiale « idéale » prédéterminée, afin d'obtenir une courbe transversale de répartition « idéale », de type sensiblement triangulaire.

Dans l'exemple représenté sur la figure 4A, la superposition de la nappe de chlorure de potassium (KCl) sur la nappe « idéale » d'ammonitrate nécessite un réglage combiné des paramètres de projection θmoy et de Rmoy de la nappe de chlorure de potassium (KCl). Ce réglage vise à décaler l'angle moyen θmoy selon A et la portée moyenne Rmoy selon P, de manière à obtenir une valeur souhaitée pour les deux paramètres de projection θmoy et de Rmoy de la nappe de chlorure de potassium sensiblement égale à la valeur des deux paramètres de projection θmoy et de Rmoy de la nappe « idéale » d'ammonitrate.

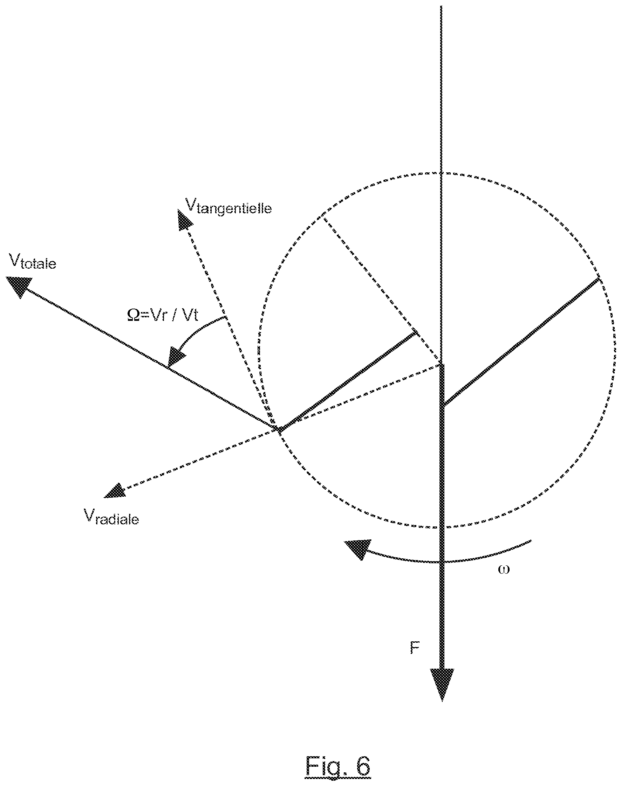

On a représenté, de manière schématique, sur la figure 6, la vitesse d'éjection d'une particule d'engrais de la nappe qui quitte le disque. Cette vitesse d'éjection est composée de la vitesse tangentielle Vt qui dépend de la vitesse de rotation ω du disque, de la longueur de pale et de la configuration géométrique des pales sur le disque, et de la vitesse radiale Vr d'éjection qui dépend de l'accélération de l'engrais dans la pale, qui elle-même dépend des caractéristiques physiques de l'engrais.

L'angle Ω d'éjection de la particule d'engrais correspond à l'angle entre la trajectoire de la particule d'engrais et la tangente au disque au point d'éjection. Cet angle Ω caractérise la vitesse radiale d'éjection Vr en fonction de la vitesse tangentielle Vt selon la relation Ω=Vr/Vt, avec, de façon simplifiée, Vt=r.ω (r étant le rayon de pale). L'angle d'éjection Ω et la vitesse de rotation ω du disque permettent le calcul de la norme de la vitesse d'éjection qui permet de quantifier la portée de la particule d'engrais.

L'invention se propose donc de réaliser un réglage combiné des deux paramètres de projection θmoy et Rmoy à partir d'une mesure d'un paramètre représentatif de la vitesse de l'engrais en sortie du disque ou d'une mesure d'un paramètre représentatif de l'angle moyen de projection. Ce réglage combiné est réalisé en automatisant au moins un paramètre de la machine influant sur la portée de l'engrais (Rmoy) en fonction d'au moins un paramètre de la machine influant sur l'angle de projection (θmoy), ou l'inverse.

L'invention propose ainsi de modifier l'angle moyen de projection θmoy par exemple en déplaçant, de manière classique, le point de chute de l'engrais sur le disque (ce qui est réalisé en modifiant la position de la goulotte d'alimentation des particules sur le disque), tandis que la portée moyenne Rmoy est automatiquement ajustée en faisant varier au moins un paramètre influant sur la portée parmi :
- la vitesse de rotation ω du disque d'épandage ;
- l'inclinaison du disque d'épandage ;
- l'inclinaison de la machine d'épandage ;
- la hauteur de la machine d'épandage.

Il est à noter que la modification d'un des paramètres influant sur la portée n'influe que de manière insignifiante sur l'angle moyen de sortie θmoy.

### 6.2 Premier mode de réalisation

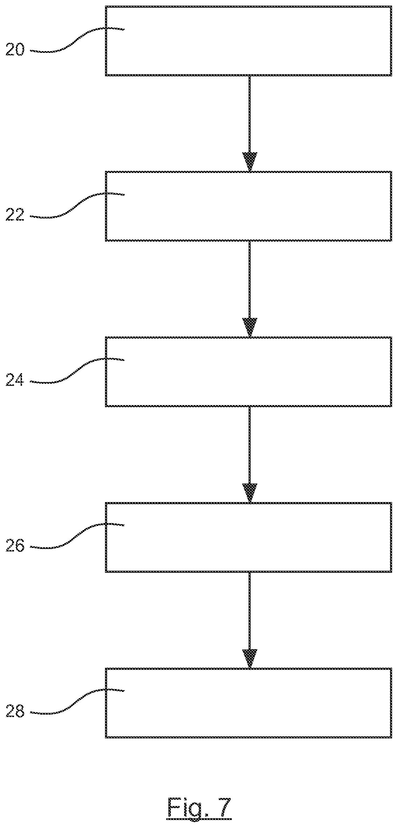

On décrit ci-après et conjointement avec la figure 7, un premier mode de réalisation de l'invention dans laquelle sont mises en oeuvre plusieurs étapes, certaines étant réalisées de façon préliminaire, au cours de travaux préparatoires par l'opérateur (exploitant), et d'autres étant réalisés durant la phase d'épandage, en temps réel, pendant le déplacement de la machine d'épandage sur la parcelle à traiter.

Ainsi, dans un premier temps, une étape initiale de réglages est effectuée (étape 20). Ces réglages peuvent être effectués par l'intermédiaire d'un ordinateur de bord comprenant classiquement une unité de traitement, équipée par exemple d'un microprocesseur, et pilotée par le programme d'ordinateur mettant en oeuvre au moins une étape du procédé de réglage de la machine agricole d'épandage selon l'invention. Dans ce cas, l'opérateur peut saisir la largeur de travail souhaitée et éventuellement les caractéristiques physiques approximatives de l'engrais à épandre (densité, granulométrie, forme) par l'intermédiaire d'une interface de l'ordinateur. Il n'est cependant pas nécessaire que l'opérateur saisisse toutes les caractéristiques de l'engrais à épandre. Il peut en effet se voir proposer, par l'intermédiaire de l'interface, un choix d'engrais parmi plusieurs classements simples d'engrais par exemple (densité, sphéricité, diamètre moyen...).

L'ordinateur comprend en outre des moyens de mémorisation (RAM, ROM) dans lesquels peuvent éventuellement être stockées des lois d'étalonnages ou des abaques qui comprennent des paramètres de réglages de la machine (position de goulotte représentée par un index de goulotte, vitesse de rotation ω du disque d'épandage, inclinaison du disque et/ou de la machine d'épandage, hauteur de la machine d'épandage) permettant d'obtenir, pour une largeur de travail donnée et un engrais donné, une courbe de distribution transversale triangulaire correspondant à une nappe «idéale», telle que la nappe d'ammonitrate. Les abaques peuvent aussi comprendre les paramètres de l'engrais en sortie du disque (vitesse, angle moyen de sortie, distance moyenne de projection) en fonction des paramètres de réglage de la machine.

À partir de la largeur de travail souhaitée, et éventuellement des caractéristiques physiques approximatives de l'engrais à épandre saisies préalablement par l'opérateur, l'ordinateur de bord ou l'opérateur effectue ensuite (étape 20) des réglages sur les éléments de l'épandeur (l'index de goulotte par exemple étant réglé à une valeur de référence), de façon à obtenir une valeur de référence de l'angle moyen de projection θmoy des particules en sortie du disque par rapport à l'axe d'avancement de la machine et une valeur de référence de la distance moyenne de projection Rmoy.

Il est également possible que l'opérateur n'effectue aucun réglage durant cette étape 20, mais choisisse de conserver les réglages des éléments de la machine tels qu'utilisés lors de la dernière opération d'épandage (d'un même type d'engrais ou d'un type d'engrais différent). Il est en outre possible que l'ordinateur de bord ou l'opérateur effectue des réglages arbitraires au cours de l'étape initiale 20. En tout état de cause, l'ordinateur de bord déduit de ces réglages initiaux les valeurs de référence de l'angle moyen de projection θmoy des particules et de la distance moyenne de projection Rmoy.

Les abaques mémorisés sont réalisés suite à des essais utilisant un engrais donné et un épandeur donné. Un problème résulte du fait qu'en pratique, les propriétés de l'engrais à épandre sont généralement différentes de l'engrais sujet aux essais et que l'épandeur n'est pas non plus exactement le même que celui utilisé pendant ces mêmes essais. Ainsi, la largeur de travail réelle obtenue lors de l'épandage sera différente de la largeur de travail souhaitée. Il est donc nécessaire d'ajuster la largeur de travail avant l'épandage, et éventuellement en continu pendant l'opération d'épandage.

Dans un premier mode de réalisation de l'invention, l'ajustement de la largeur de travail, et en particulier des deux paramètres de projection θmoy et Rmoy est effectué par l'intermédiaire du dispositif électronique connu sous le nom « Justax » (marque déposée), qui fait l'objet du document de brevet FR-2 719 188, déposé par la demanderesse.

On ne décrira pas en détail le mode de fonctionnement de ce dispositif. On rappellera cependant que ce dispositif comporte dans un mode de mise en oeuvre deux capteurs d'impacts placés à la périphérie d'un disque d'épandage dans le flux de granulés projetés. La position de chacun des deux capteurs par rapport au disque est telle que l'angle moyen de projection θmoy souhaité correspond à la bissectrice de l'angle entre les deux capteurs par rapport au disque. Le principe de fonctionnement repose sur la mesure de la différence des signaux issus des deux capteurs excités par les impacts des granulés d'engrais, et sur la modification du point de chute de l'engrais sur le disque (et donc de la direction d'épandage θmoy) jusqu'à ce que cette différence soit nulle (on parle alors d'équilibrage du « Justax »). Lorsque la différence est nulle, c'est-à-dire lorsque les capteurs sont frappés de la même façon par les granulés d'engrais, la valeur courante de l'angle de projection θmoy correspond sensiblement à l'angle de projection θmoy souhaité (étape 22).

Ce dispositif permet donc de modifier la position spatiale de la nappe au sol, en particulier l'angle moyen θmoy, en modifiant le point de chute de l'engrais sur le disque de manière à obtenir la valeur d'angle moyen θmoy souhaitée.

Dans ce mode de réalisation, le support qui porte les deux capteurs est positionné par l'ordinateur de bord (ou manuellement par l'opérateur) sur une plaque de montage selon un marquage indiquant la largeur d'épandage (de travail) souhaitée, le marquage étant déterminée par le fabricant.

L'opérateur peut alors commencer l'opération d'épandage et alimenter les disques rotatifs en particules à épandre. À moins que la position des capteurs corresponde directement à la position voulue, la position du point de chute sur le disque de l'engrais quittant la trémie (et donc l'angle moyen de sortie θmoy des particules) est réglée de façon à équilibrer le « Justax ».

Ce réglage est contrôlé par l'ordinateur de bord ou par l'utilisateur depuis sa cabine, à l'aide d'une manette par exemple, qui modifie la position de la goulotte. Comme souligné auparavant, l'équilibrage du « Justax » est atteint lorsque la différence des signaux issus des deux capteurs excités par les impacts des granulés d'engrais est nulle. Une fois cet équilibre atteint, la nappe d'engrais a donc subit une rotation (notée A dans la figure 4A) et a été recentrée/alignée dans le même axe que la nappe d'engrais « idéale » (celle d'ammonitrate par exemple) sans modification de la distance moyenne de projection Rmoy.

Une fois le « Justax » équilibré, l'index de goulotte, qui représente la position de la goulotte permettant l'équilibrage, est lu. La lecture de cet index est par exemple réalisée par l'intermédiaire d'un capteur potentiométrique relié au microprocesseur de l'ordinateur de bord. Cet index de goulotte est ensuite comparé avec l'index de goulotte de référence pour l'engrais donné et la largeur de travail souhaitée tel que mémorisé dans l'ordinateur de bord. La différence entre l'index de goulotte lu et l'index de goulotte de référence permet alors de déterminer une information représentative d'un décalage entre la valeur souhaitée de l'angle moyen de projection (θmoy) et la valeur de référence de l'angle moyen de projection (θmoy), à l'étape 24. En effet, comme souligné auparavant, il est connu qu'à une variation de la position de goulotte correspond une variation d'angle moyen de projection (θmoy).

La Demanderesse a constaté, à la suite de nombreux essais, que l'angle moyen de projection θmoy du flux d'engrais est directement fonction de l'angle d'éjection Ω d'une particule d'engrais représenté sur la figure 6. Ainsi, à une augmentation de la valeur de l'angle d'éjection Ω (pour lequel Vr augmente car Vt est constante) correspond une augmentation de la valeur de θmoy ainsi que de la valeur de la distance moyenne de projection Rmoy. Ainsi, la vitesse d'une particule d'engrais en sortie du disque est liée à l'angle moyen de projection θmoy.

Selon cette constatation, la connaissance de la vitesse d'une particule d'engrais en sortie du disque permet de déduire l'angle moyen de projection θmoy et, inversement, la connaissance de l'angle moyen de projection θmoy permet de déduire la vitesse de l'engrais en sortie du disque. La vitesse de l'engrais en sortie du disque est liée à la vitesse de rotation ω du disque qui elle-même, comme mentionné précédemment, est liée à la distance moyenne de projection Rmoy. La relation entre la vitesse d'une particule d'engrais en sortie du disque et l'angle moyen de projection θmoy peut être obtenue par expérimentation, et peut être variable en fonction de la machine utilisée, par exemple en fonction des disques...

Conformément à la constatation de la demanderesse, l'information représentative du décalage d'angle moyen (θmoy) permet, en fonction d'une règle de calcul prédéterminée qui est mémorisée dans l'ordinateur de bord, de déterminer une information représentative d'un décalage entre la valeur souhaitée de la distance moyenne de projection Rmoy et la valeur de référence de la distance moyenne de projection Rmoy, à l'étape 26. Cette information représentative d'un décalage de distance moyenne de projection (Rmoy) correspond à une valeur de modification de la vitesse de sortie des particules d'engrais, et donc à une valeur de modification de la vitesse de rotation du disque nécessaire pour modifier la distance moyenne de projection Rmoy. Cette modification de la vitesse de rotation du disque peut être mise en oeuvre par l'ordinateur de bord, ou directement par l'utilisateur (étape 28).

Une fois cette modification de la vitesse de rotation du disque effectuée, la nappe d'engrais a donc subit une omothétie (notée P dans la figure 4A) et a été sensiblement superposée à la nappe d'engrais « idéale » (celle d'ammonitrate par exemple).

La règle de calcul prédéterminée peut être une fonction mathématique ou un abaque (tableau) mémorisé dans l'ordinateur de bord. L'abaque peut être sélectionné parmi plusieurs abaques mémorisés comportant chacun, pour un type d'engrais donné et une largeur de travail donnée, des valeurs d'index de goulotte correspondant à des valeurs de vitesse de rotation du disque. La fonction mathématique peut faire correspondre des valeurs de variations de vitesse de rotation du disque à des valeurs de modification d'angle moyen ou d'index de goulotte.

Il est envisageable qu'à partir de cette valeur de décalage d'angle moyen (θmoy), de façon à obtenir la valeur souhaitée de distance moyenne de projection Rmoy (étape 28), l'ordinateur de bord puisse régler, sur la base d'une règle de calcul mémorisée, au moins un élément de la machine d'épandage agissant sur au moins un des aspects suivants : la vitesse de rotation du disque, l'inclinaison du disque, l'inclinaison de la machine, la hauteur de la machine. La règle de calcul peut être par exemple un abaque sélectionné parmi plusieurs abaques mémorisés comportant, pour un type d'engrais donné et une largeur de travail donnée, des valeurs d'index de goulotte qui correspondent à des valeurs de vitesse de rotation du disque, à des hauteurs de la machine, à des valeurs d'inclinaison du disque ou à des valeurs d'inclinaison de la machine. La règle de calcul peut être une fonction mathématique qui peut faire correspondre des valeurs de variations de hauteur de la machine à des valeurs de modification d'index de goulotte.

Il est à noter que le réglage « Justax » peut être manuel, de même que la variation de vitesse de rotation du disque qui peut être réglée par l'intermédiaire de la prise de force du tracteur.

Les capteurs du dispositif « Justax » utilisé dans ce mode de réalisation peuvent être du type décrit dans le document de brevet FR 2 719 188, c'est-à-dire comprenant un tube creux à une extrémité duquel un capteur acoustique, tel qu'un microphone, est logé. L'extrémité basse du tube est exposée à l'impact des particules d'engrais quand elle se trouve dans la nappe de particules d'engrais quittant le disque.

Dans une variante de réalisation représentée sur la vue en coupe de la figure 6, le capteur comprend un barreau cylindrique plein 20 comprenant un capteur piézoélectrique 21 à une extrémité ouverte. Le tube est réalisé dans un matériau résistant à la corrosion due à l'impact des grains. Il est par exemple en acier inoxydable. Classiquement, le capteur piézoélectrique est apte à émettre des signaux électriques qui sont fonctions des chocs auquel il est soumis. Ces signaux électriques sont transmis à des moyens de traitement électronique, tels que décrit dans le document de brevet FR 2 719 188, reliés à l'ordinateur de bord.

### 6.3 Deuxième mode de réalisation

Selon un deuxième mode de réalisation de l'invention, et de la même manière que dans le premier mode de réalisation, une étape initiale de réglages est effectuée à l'étape 20. Cependant, dans ce deuxième mode de réalisation, l'ajustement de la largeur de travail, et en particulier des deux paramètres de projection θmoy et Rmoy, est effectué en utilisant des moyens de mesure de vitesse aptes à mesurer la vitesse des particules en sortie du disque, ces moyens de mesure de vitesse étant reliés à l'ordinateur de bord. À l'étape 22, on mesure la valeur courante de la vitesse de rotation du disque (qui est la valeur de référence) et, à l'étape 24, on ajuste ensuite cette valeur courante (et/ou l'inclinaison du disque et/ou l'inclinaison de la machine et/ou la hauteur de la machine) de façon à obtenir la valeur souhaitée de la vitesse d'engrais (en mesurant la valeur courante par l'intermédiaire des moyens de mesure de vitesse).

Une fois cette modification de la vitesse de rotation du disque effectuée, la nappe d'engrais a donc subit une omothétie (notée P dans la figure 4A) sans modification de l'angle moyen de projection θmoy.

Conformément à la constatation de la demanderesse selon laquelle la vitesse d'une particule d'engrais en sortie du disque est liée à l'angle moyen de projection θmoy, l'ordinateur de bord utilise une règle de calcul pour déterminer une information représentative d'un décalage d'angle moyen θmoy qui correspond à l'angle de rotation de nappe nécessaire (étape 26). Comme mentionné auparavant, cette information représentative d'un décalage d'angle moyen θmoy correspond à une valeur de décalage de l'index de goulotte. Ainsi, la position de la goulotte est ajustée par l'ordinateur de bord par la valeur de décalage, étape 28. Une fois cette modification de l'angle moyen de projection θmoy effectuée, la nappe d'engrais a donc été recentrée (notée A dans la figure 4A) et a été sensiblement superposée à la nappe d'engrais « idéale » (celle d'ammonitrate par exemple).

La règle de calcul prédéterminée peut être une fonction mathématique ou un abaque (tableau) mémorisé dans l'ordinateur de bord. L'abaque peut être sélectionné parmi plusieurs abaques mémorisés comportant chacun, pour un type d'engrais donné et une largeur de travail donnée, des valeurs de vitesse de rotation du disque correspondant des valeurs d'index de goulotte. La fonction mathématique peut faire correspondre des valeurs de modification d'angle moyen ou d'index de goulotte à des valeurs de variations de vitesse de rotation du disque.

Dans une mise en oeuvre possible du deuxième mode de réalisation de l'invention, les moyens de mesure de vitesse peuvent comprendre des moyens de prise d'images du flux de particules d'engrais projeté du disque rotatif d'épandage et des moyens de traitement de ces images permettant d'analyser la vitesse des particules d'engrais. Un avantage de cette solution est le faible coût de sa mise en oeuvre et le fait que la mesure de la vitesse soit effectuée sans contact. De préférence, les moyens de prise d'image (caméra, appareil photo) comprennent un dispositif d'éclairage qui peut être constant, instantané par flash ou stroboscopique.

Selon une variante possible du deuxième mode de réalisation, l'étape de mesure peut comprendre une mesure de la distance de projection des particules, à la place de la mesure de la vitesse de projection.

### 6.4 Autres caractéristiques et avantages

Il est à noter que dans un mode particulier de réalisation de l'invention, le réglage de l'angle moyen de projection et le réglage de la vitesse de rotation du disque (donc de la distance moyenne de projection) peuvent se faire simultanément.

Il est également à noter que la forme triangulaire de la distribution transversale d'engrais est une forme idéale qu'il est possible d'atteindre uniquement avec certains engrais à certaines largeurs de travail. L'invention a justement pour objet d'augmenter le pourcentage d'engrais pour lesquels la courbe de répartition va tendre vers un triangle, pour des largeurs de travail importantes. Il n'est cependant pas possible d'obtenir une courbe triangulaire pour tous les engrais à toutes les largeurs de travail.

En effet, la vitesse de rotation des disques peut au-delà d'une certaine valeur critique briser les engrais. Selon l'invention, dans le cas où la vitesse de rotation du disque rotatif à ajuster atteint cette valeur critique pour l'engrais donné (ceci est déterminé par l'intermédiaire d'abaques mémorisés), l'ordinateur de bord met en oeuvre des règles de décision : ainsi, il pourra choisir de faire un compromis sur la forme de la courbe de distribution transversale et choisir une forme plutôt trapézoïdale que triangulaire. L'angle moyen de sortie θmoy devra en conséquence être modifié ce qui nécessitera un nouveau réglage de la position de la goulotte (et donc de l'angle moyen de sortie θmoy) adapté à cette vitesse critique maximum admissible pour cet engrais.

Dans certains cas, si la balistique des grains ne permet pas d'obtenir la portée souhaitée (correspondant à une largeur de travail souhaitée, l'ordinateur pourra choisir de faire un compromis sur la forme de la courbe de distribution transversale et choisir une forme plutôt trapézoïdale que triangulaire. Il est envisageable de mettre en oeuvre une alarme (visuelle et/ou sonore) apte à être activée par l'ordinateur pour indiquer à l'opérateur que l'engrais n'est pas adapté à la portée souhaitée.

Un avantage des deux modes de réalisation décrits ci-dessus est que le réglage de la largeur de travail, et en particulier des paramètres de projection θmoy et Rmoy, est effectué selon les caractéristiques réelles de l'engrais épandu.

Dans un mode de réalisation, les variations dans le temps de la vitesse d'une particule d'engrais ou de l'angle moyen θmoy sont interprétées en temps réel par l'ordinateur embarqué à bord de la machine d'épandage qui commande également en temps réel les ajustements des éléments de la machine d'épandage agissant sur au moins un des paramètres influant sur la distance moyenne de projection Rmoy et l'angle moyen de projection θmoy.

Dans le cas de deux disques associés chacun à une goulotte, les deux goulottes sont reliées cinématiquement de manière à ce que le changement du point de chute de l'engrais sur les disques rotatifs se fasse conjointement. Chaque disque rotatif peut comprendre des pales de longueurs identiques ou différentes.

Le principe de l'invention s'applique également à une machine d'épandage qui ne comprend qu'un disque rotatif.

Les particules d'engrais sont de préférence des granulés d'engrais minéral ou organique, mais peuvent également être du sable, du sel ou tout autre matière solide devant être épandue. Comme déjà mentionné, l'invention s'applique également, en particulier, aux semis.

Il est à noter que le procédé de réglage de l'invention peut également s'appliquer au cas de modulation spatiale des apports d'engrais. Ainsi, si la configuration de la parcelle nécessite une modification des paramètres de départ, comme par exemple un rétrécissement qui oblige à réduire la largeur de travail, le procédé de réglage eut néanmoins s'appliquer, sous une forme adaptée. L'invention peut ainsi s'appliquer aux situations de l'agriculture de précision de l'agriculture de précision.

## Revendications

1. Procédé de réglage d'une machine agricole d'épandage de particules comprenant des moyens de distribution de particules sur au moins un disque d'épandage, ledit disque étant rotatif et apte à projeter les particules sur le sol, ledit réglage visant à obtenir une valeur souhaitée pour deux paramètres de projection prédéterminés, à savoir un angle moyen de projection des particules en sortie du disque par rapport à l'axe d'avancement de ladite machine et une distance moyenne de projection,
**caractérisé en ce que** le procédé détermine ledit réglage pour deux paramètres de projection prédéterminés à partir d'une seule mesure, et **en ce qu'**il comprend les étapes suivantes :
- une étape de mesure d'une première information représentative d'un décalage entre la valeur souhaitée d'un premier desdits paramètres de projection et une valeur de référence dudit premier paramètre de projection ;
- une étape de détermination d'une deuxième information représentative d'un décalage entre la valeur souhaitée dudit second desdits paramètres de projection et une valeur de référence dudit second paramètre de projection en fonction de ladite première information mesurée et d'une règle de calcul prédéterminée ;
- une première étape de réglage d'au moins un élément de ladite machine de façon à obtenir la valeur souhaitée dudit premier paramètre, en fonction dudit décalage entre la valeur souhaitée et la valeur de référence dudit premier desdits paramètres de projection ; et
- une seconde étape de réglage d'au moins un élément de ladite machine de façon à obtenir la valeur souhaitée dudit second paramètre, en fonction de ladite deuxième information représentative dudit décalage entre la valeur souhaitée et la valeur de référence dudit second desdits paramètres de projection.

2. Procédé de réglage selon la revendication 1, **caractérisé en ce que** lesdites valeurs de référence desdits paramètres de projection correspondent aux valeurs obtenues dans les conditions de réglage initiales desdits éléments de ladite machine.

3. Procédé de réglage selon l'une des revendications 1 ou 2, **caractérisé en ce que** ladite première information mesurée est représentative d'un décalage d'angle moyen de projection des particules.

4. Procédé de réglage selon la revendication 3, **caractérisé en ce que** ladite étape de mesure comprend les sous-étapes de :
- obtention d'un signal électrique représentatif des impacts générés par un flux de particules projetées en sortie du disque sur au moins un élément rigide, dit élément d'impact ;
- traitement dudit signal, pour déterminer une information sur le décalage entre la valeur courante et la valeur souhaitée dudit angle moyen de projection des particules ;
- modification de la valeur courante dudit angle moyen afin de diminuer ledit décalage ; et
- itération des trois sous-étapes précédentes jusqu'à ce que ladite valeur courante et ladite valeur souhaitée soient égales.

5. Procédé de réglage selon l'une des revendications 1 à 4, **caractérisé en ce que** ladite première étape de réglage et ladite étape de mesure sont simultanées.

6. Procédé de réglage selon la revendication 1, **caractérisé en ce que** l'étape de mesure comprend une mesure de la vitesse de projection des particules en sortie du disque.

7. Procédé de réglage selon l'une quelconque des revendications 1 à 6, **caractérisé en ce que** lesdites étapes de réglage agissent sur au moins un des aspects appartenant au groupe comprenant :
- la vitesse de rotation du disque d'épandage ;
- l'inclinaison du disque d'épandage ;
- l'inclinaison de la machine d'épandage ;
- la hauteur de la machine d'épandage ;
- le point de chute des particules sur le disque d'épandage.

8. Procédé de réglage selon l'une quelconque des revendications 1 à 7, **caractérisé en ce que** ladite règle de calcul prédéterminée est une fonction mathématique liant ledit angle moyen de projection des particules en sortie du disque et ladite distance moyenne de projection.

9. Procédé de réglage selon l'une quelconque des revendications 1 à 7, **caractérisé en ce que** ladite règle de calcul prédéterminée est un abaque ou une table de valeurs liant ledit angle moyen de projection des particules en sortie du disque et ladite distance moyenne de projection.

10. Procédé de réglage selon l'une quelconque des revendications 1 à 9, **caractérisé en ce que** ladite règle de calcul prédéterminée est choisie en fonction d'une catégorie d'engrais donnée et une largeur de travail souhaitée.

11. Programme d'ordinateur comprenant des instructions de code de programme pour l'exécution des étapes du procédé de réglage d'une machine agricole d'épandage, selon l'une quelconque des revendications 1 à 10 lorsque ledit programme est exécuté sur un ordinateur.

12. Dispositif de réglage d'une machine agricole d'épandage de particules comprenant des moyens de distribution de particules sur au moins un disque d'épandage, ledit disque étant rotatif et apte à projeter les particules sur le sol, ledit réglage visant à obtenir une valeur souhaitée pour deux paramètres de projection prédéterminés, à savoir un angle moyen de projection des particules en sortie du disque par rapport à l'axe d'avancement de ladite machine et une distance moyenne de projection,
**caractérisé en ce que** le dispositif détermine ledit réglage pour deux paramètres de projection prédéterminés à partir d'une seule mesure, et **en ce qu'**il comprend :
- des moyens de mesure d'une première information représentative d'un décalage entre la valeur souhaitée d'un premier desdits paramètres de projection et une valeur de référence dudit premier paramètre de projection ;
- des moyens de détermination d'une deuxième information représentative d'un décalage entre la valeur souhaitée dudit second desdits paramètres de projection et une valeur de référence dudit second paramètre de projection en fonction de ladite première information mesurée et d'une règle de calcul prédéterminée ; et
- des moyens de réglage d'au moins un élément de ladite machine de façon à obtenir la valeur souhaitée dudit premier paramètre, en fonction dudit décalage ;
- des moyens de réglage d'au moins un élément de ladite machine de façon à obtenir la valeur souhaitée dudit second paramètre, en fonction de ladite deuxième information représentative de la valeur de référence dudit second paramètre.

13. Dispositif de réglage selon la revendication 12, **caractérisé en ce que** lesdits moyens de mesure comprennent des moyens de mesure d'une information représentative d'un décalage d'angle moyen de projection des particules en sortie du disque.

14. Dispositif de réglage selon la revendication 12, lesdits moyens de mesure comprenant des moyens de mesure d'une information représentative d'un décalage de la vitesse de projection des particules en sortie du disque.

15. Machine agricole d'épandage de particules équipée de moyens de distribution de particules sur au moins un disque d'épandage, ledit disque étant rotatif et apte à projeter les particules sur le sol, la machine étant **caractérisée en ce qu'**elle comporte un dispositif de réglage selon l'une quelconque des revendications 12 à 14.

16. Machine agricole selon la revendication 15 **caractérisée en ce qu'**elle comporte des moyens de réglage automatique par asservissement d'au moins un desdits élément de ladite machine.

## Patentansprüche

1. Verfahren zum Einstellen eines landwirtschaftlichen Zentrifugalstreuers, der Mittel zum Verteilen von Partikeln auf mindestens eine Streuscheibe umfasst, wobei die Scheibe rotierend und imstande ist, die Partikel auf den Boden zu schleudern, wobei das Einstellen darauf abzielt, einen gewünschten Wert für zwei vorher festgelegte Schleuderparameter, nämlich einen mittleren Schleuderwinkel der Partikel beim Verlassen der Scheibe in Bezug auf die Fortbewegungsachse der Maschine und eine mittlere Schleuderentfernung, zu erhalten,
**dadurch gekennzeichnet, dass** das Verfahren die Einstellung für zwei vorher festgelegte Schleuderparameter auf der Basis einer einzigen Messung bestimmt, und dass es die folgenden Schritte umfasst:
- einen Schritt des Messens einer ersten repräsentativen Information über eine Abweichung zwischen dem gewünschten Wert eines ersten der Schleuderparameter und einem Bezugswert des ersten Schleuderparameters;
- einen Schritt des Bestimmens einer zweiten repräsentativen Information über eine Abweichung zwischen dem gewünschten Wert des zweiten der Schleuderparameter und einem Bezugswert des zweiten Schleuderparameters in Abhängigkeit von der ersten gemessenen Information und einer vorher festgelegten Berechnungsregel;
- einen ersten Schritt des Einstellens von mindestens einem Element der Maschine in Abhängigkeit von der Abweichung zwischen dem gewünschten Wert und dem Bezugswert des ersten der Schleuderparameter derart, um den gewünschten Wert des ersten Parameters zu erhalten; und
- einen zweiten Schritt des Einstellens von mindestens einem Element der Maschine in Abhängigkeit von der zweiten repräsentativen Information über die Abweichung zwischen dem gewünschten Wert und dem Bezugswert des zweiten der Schleuderparameter derart, um den gewünschten Wert des zweiten Parameters zu erhalten.

2. Verfahren zum Einstellen nach Anspruch 1, **dadurch gekennzeichnet, dass** die Bezugswerte der Schleuderparameter den unter den anfänglichen Einstellungsbedingungen der Ersteinstellung der Elemente der Maschine erhaltenen Werten entsprechen.

3. Verfahren zum Einstellen nach einem der Ansprüche 1 oder 2, **dadurch gekennzeichnet, dass** die erste gemessene Information für eine mittlere Schleuderwinkelabweichung der Partikel repräsentativ ist.

4. Verfahren zum Einstellen nach Anspruch 3, **dadurch gekennzeichnet, dass** der Schritt des Messens die folgenden Unterschritte umfasst:
- Erhalten eines elektrischen Signals, das für die Aufschläge repräsentativ ist, die von einem Strom von Partikeln, die beim Verlassen der Scheibe auf mindestens ein starres Element, bezeichnet als Aufschlagelement, geschleudert werden, erzeugt werden;
- Verarbeiten des Signals, um eine Information über die Abweichung zwischen dem aktuellen Wert und dem gewünschten Wert des mittleren Schleuderwinkels der Partikel zu bestimmen;
- Ändern des aktuellen Werts des mittleren Winkels, um die Abweichung zu verringern; und
- Wiederholen der drei vorangehenden Unterschritte, bis der aktuelle Wert und der gewünschte Wert gleich sind.

5. Verfahren zum Einstellen nach einem der Ansprüche 1 bis 4, **dadurch gekennzeichnet, dass** der erste Schritt des Einstellens und der Schritt des Messens gleichzeitig erfolgen.

6. Verfahren zum Einstellen nach Anspruch 1, **dadurch gekennzeichnet, dass** der Schritt des Messens eine Messung der Schleudergeschwindigkeit der Partikel beim Verlassen der Scheibe umfasst.

7. Verfahren zum Einstellen nach einem der Ansprüche 1 bis 6, **dadurch gekennzeichnet, dass** die Schritte des Einstellens auf mindestens einen der Aspekte wirken, die zu der Gruppe gehören, die umfasst:
- die Rotationsgeschwindigkeit der Streuscheibe;
- die Neigung der Streuscheibe;
- die Neigung der Streumaschine;
- die Höhe der Streumaschine;
- den Punkt des Herabfallens der Partikel auf die Streuscheibe.

8. Verfahren zum Einstellen nach einem der Ansprüche 1 bis 7, **dadurch gekennzeichnet, dass** die vorher festgelegte Berechnungsregel eine mathematische Funktion ist, welche den mittleren Schleuderwinkel der Partikel beim Verlassen der Scheibe und die mittlere Schleuderentfernung verbindet.

9. Verfahren zum Einstellen nach einem der Ansprüche 1 bis 7, **dadurch gekennzeichnet, dass** die vorher festgelegte Berechnungsregel ein Nomogramm oder eine Wertetabelle ist, welche/s den mittleren Schleuderwinkel der Partikel beim Verlassen der Scheibe und die mittlere Schleuderentfernung verbindet.

10. Verfahren zum Einstellen nach einem der Ansprüche 1 bis 9, **dadurch gekennzeichnet, dass** die vorher festgelegte Berechnungsregel in Abhängigkeit von einer gegebenen Düngerkategorie und einer gewünschten Arbeitsbreite ausgewählt ist.

11. Rechnerprogramm, umfassend Programmcodebefehle für die Ausführung der Schritte des Verfahrens zum Einstellen eines landwirtschaftlichen Zentrifugalstreuers nach einem der Ansprüche 1 bis 10, wenn das Programm auf einem Rechner ausgeführt wird.

12. Vorrichtung zum Einstellen eines landwirtschaftlichen Zentrifugalstreuers, der Mittel zum Verteilen von Partikeln auf mindestens eine Streuscheibe umfasst, wobei die Scheibe rotierend und imstande ist, die Partikel auf den Boden zu schleudern, wobei das Einstellen darauf abzielt, einen gewünschten Wert für zwei vorher festgelegte Schleuderparameter, nämlich einen mittleren Schleuderwinkel der Partikel beim Verlassen der Scheibe in Bezug auf die Fortbewegungsachse der Maschine und eine mittlere Schleuderentfernung, zu erhalten,
**dadurch gekennzeichnet, dass** die Vorrichtung die Einstellung für zwei vorher festgelegte Schleuderparameter auf der Basis einer einzigen Messung bestimmt, und dass sie umfasst:
- Mittel zum Messen einer ersten repräsentativen Information über eine Abweichung zwischen dem gewünschten Wert eines ersten der Schleuderparameter und einem Bezugswert des ersten Schleuderparameters;
- Mittel zum Bestimmen einer zweiten repräsentativen Information über eine Abweichung zwischen dem gewünschten Wert des zweiten der Schleuderparameter und einem Bezugswert des zweiten Schleuderparameters in Abhängigkeit von der ersten gemessenen Information und einer vorher festgelegten Berechnungsregel; und
- Mittel zum Einstellen von mindestens einem Element der Maschine in Abhängigkeit von der Abweichung derart, um den gewünschten Wert des ersten Parameters zu erhalten;
- Mittel zum Einstellen von mindestens einem Element der Maschine in Abhängigkeit von der zweiten repräsentativen Information über den Bezugswert des zweiten Parameters derart, um den gewünschten Wert des zweiten Parameters zu erhalten.

13. Vorrichtung zum Einstellen nach Anspruch 12, **dadurch gekennzeichnet, dass** die Messmittel Mittel zum Messen einer für eine mittlere Schleuderwinkelabweichung der Partikel beim Verlassen der Scheibe repräsentativen Information umfassen.

14. Vorrichtung zum Einstellen nach Anspruch 12, wobei die Messmittel Mittel zum Messen einer für eine Abweichung der Schleudergeschwindigkeit der Partikel beim Verlassen der Scheibe repräsentativen Information umfassen.

15. Landwirtschaftlicher Zentrifugalstreuer, der mit Mitteln zum Verteilen von Partikeln auf mindestens eine Streuscheibe ausgestattet ist, wobei die Scheibe rotierend und imstande ist, die Partikel auf den Boden zu schleudern, wobei die Maschine **dadurch gekennzeichnet ist, dass** sie eine Vorrichtung zum Einstellen nach einem der Ansprüche 12 bis 14 aufweist.

16. Landwirtschaftliche Maschine nach Anspruch 15, **dadurch gekennzeichnet, dass** sie Mittel zum automatischen Einstellen durch Steuern von mindestens einem der Elemente der Maschine aufweist.

## Claims

1. Method for adjusting an agricultural particle spreader machine comprising means for distributing particles on at least one spreader disc, said disc being rotatable and capable of projecting the particles onto the ground, said adjustment aiming to obtain a desired value for two predetermined projection parameters, namely an average angle of projection of the particles at the disc output with respect to the machine's axis of progress and an average projection distance; **characterised in that** the method determines the setting for two predetermined projection parameters from a single measurement, and **in that** it comprises the following steps:
- a step of measuring a first piece of information representative of a deviation between the desired value of a first of the projection parameters and a reference value of the first projection parameter;
- a step of determining a second piece of information representative of a deviation between the desired value of the second of the projection parameters and a reference value of said second projection parameter according to the first measured piece of information and a predetermined calculation rule;
- a first step of adjusting at least one element of the machine so as to obtain the desired value of the first parameter, as a function of the deviation between the desired value and the reference value of the first of the projection parameters; and
- a second step of adjusting at least one element of the machine so as to obtain the desired value of the second parameter, according to the second piece of information representative of the deviation between the desired value and the reference value of the second of the projection parameters.

2. Method of adjustment according to Claim 1, **characterised in that** the projection parameters' reference values correspond to the values obtained under the initial adjustment conditions of the elements of the machine.

3. Method of adjustment according to either of Claims 1 or 2, **characterised in that** the first piece of measured information is representative of an average particle projection angle deviation.

4. Method of adjustment according to Claim 3, **characterised in that** the measuring step comprises the sub-steps of:
- obtaining an electrical signal representative of the impacts generated by a flow of particles projected at the disc output on at least one rigid element, known as the impact element;
- processing this signal to determine information on the deviation between the current value and the desired value of the average particle projection angle;
- changing the current value of the average angle to decrease this deviation; and
- repeating the three previous sub-steps until this current value and this desired value are equal;

5. Method of adjustment according to any one of Claims 1 to 4, **characterised in that** the first adjustment step and the measuring step are simultaneous.

6. Method of adjustment according to Claim 1, **characterised in that** the measurement step includes a measurement of the projection velocity of the particles at the disc output.

7. Method of adjustment according to any of Claims 1 to 6, **characterised in that** the adjustment steps act on at least one of the aspects pertaining to the group comprising:
- the spreader disc's rotational speed;
- the spreading disc's inclination;
- the spreading machine's inclination;
- the height of the spreading machine;
- the point at which the particles fall on the spreading disc.

8. Method of adjustment according to any of Claims 1 to 7, **characterised in that** the predetermined calculation rule is a mathematical function linking the average particle projection angle at the disc output and the average projection distance.

9. Method of adjustment according to any of Claims 1 to 7, **characterised in that** the predetermined calculation rule is a chart or value table linking the average particle projection angle at the disc output and the average projection distance.

10. Method of adjustment according to any of Claims 1 to 9, **characterised in that** the predetermined calculation rule is selected according to a given fertiliser category and a desired working width.

11. A computer programme comprising programme code instructions for performing the steps of the method of adjustment of an agricultural spreading machine, according to any of Claims 1 to 10 when the program is executed on a computer.

12. Device for adjusting an agricultural particle spreading machine comprising means for distributing particles on at least one spreading disc, the disc being rotatable and capable of projecting the particles onto the ground, said adjustment aiming to obtain a desired value for two predetermined projection parameters, namely an average angle of projection of the particles at the disc output with respect to the machine's axis of progress and an average projection distance, **characterised in that** the device determines the setting for two predetermined projection parameters from a single measurement, and **in that** it comprises:
- means for measuring a first piece of information representative of a deviation between the desired value of a first of these projection parameters and a reference value of this first projection parameter;
- means for determining a second piece of information representative of a deviation between the desired value of the second of these projection parameters and a reference value of the second projection parameter as a function of this first piece of measured information and a predetermined calculation rule; and
- means for adjusting at least one element of the machine so as to obtain the desired value of this first parameter, as a function of this deviation;
- means for adjusting at least one element of the machine so as to obtain the desired value of this second parameter, in accordance with this second piece of information representative of the reference value of this second parameter.

13. Adjustment device according to Claim 12, **characterised in that** the measuring means comprise means for measuring information representative of an average angle shift of projection of the particles at the disc output.

14. Adjustment device according to Claim 12, said measuring means comprising means for measuring information representative of a deviation in the projection velocity of the particles at the disc output.

15. Agricultural particle spreading machine equipped with means for distributing particles on at least one spreading disc, said disc being rotatable and capable of projecting the particles onto the ground, the machine being **characterised in that** it includes an adjustment device according to any of Claims 12 to 14.

16. Agricultural machine according to Claim 15 **characterised in that** it includes means for automatic adjustment through servo-control of at least one of the elements of the machine.
